# EUROPÄISCHE PATENTANMELDUNG

(11) **EP 3 403 549 A1**
(43) Veröffentlichungstag der Anmeldung: **21.11.2018**
(21) Anmeldenummer: 18172470.9
(22) Anmeldetag: 15.05.2018
(51) Int. Cl.: A47J 31/44, A47J 31/06

(54) **EINBRINGVORRICHTUNG FÜR EINE FILTERMEMBRAN IN EINE PORTIONSKAFFEEMASCHINE**

(30) Priorität: 16.05.2017 DE 102017110571
(71) Anmelder: Smart Barista GmbH, 86825 Bad Wörishofen (DE)
(72) Erfinder: Kobler, Piero, 93059 Regensburg (DE)
(74) Vertreter: Bittner, Bernhard

(57) **Zusammenfassung**

Die Erfindung betrifft eine Einbringvorrichtung (1) zum, insbesondere permanenten, Anbringen einer Filtermembran an ein Element, insbesondere eine Matrize, eines Heißgetränkesystems, insbesondere einer Portionskaffeemaschine, wobei die Einbringvorrichtung (1) ein Halteelement (10) mit wenigstens einer Aufnahmeeinrichtung (2) aufweist, welche zum wenigstens zeitweisen Aufnehmen einer Filtermembran geeignet und bestimmt ist. Erfindungsgemäß weist die Aufnahmeeinrichtung (2) wenigstens eine Ansaugeinrichtung (4) auf, die zum Aufnehmen einer Filtermembran via Unterdruck geeignet und bestimmt ist.

## Beschreibung

Die vorliegende Erfindung betrifft Einbringvorrichtungen zum insbesondere permanenten Anbringen einer Filtermembran an ein Heißgetränkesystem, insbesondere eine Portionskaffeemaschine, und insbesondere an eine Matrize eines Heißgetränkesystems bzw. einer Portionskaffeemaschine. Bekannt ist aus dem Stand der Technik eine Vielzahl an Kaffeemaschinen, bei denen über sogenannte Einweg-Pads oder Einweg-Kapseln eine bereits vorportionierte Einheit Kaffeepulver bzw. eine vorportionierte Einheit vorgemischte Kaffeepulvermischung eingebracht wird und aus dieser ein Kaffee zubereitet wird.

Der Begriff Heißgetränkesystem bezieht sich dabei allgemein auf Getränkezubereitungsmaschinen, mit denen nicht nur koffeinhaltige Heißgetränke, sondern auch weitere Geschmackssorten zubereitet werden können, die aber ebenfalls über vorportionierte Pads oder Kapseln bedient werden. Bekannt sind aus dem Stand der Technik auch Kapseln, die dem Benutzer nicht nur eine einmalige Benutzung versprechen, sondern mehrmals durch den Benutzer selbst befüllt und verwendet werden können.

Aus der Patentanmeldung EP 2 682 028 A1 der Anmelderin ist ein wiederverwendbarer Einsatz für eine Portionskaffeemaschine bekannt, in der eine spezifisch ausgebildete Filtermembran vorgestellt wird, die auf die Matrize einer Portionskaffeemaschine eingesetzt werden kann und dort für mehrere Aufbrühvorgänge verbleiben kann. Diese eingesetzte Filtermembran übernimmt in Folge die eigentlich dem Deckel einer Einweg-Kapsel zugewiesene Aufgabe, einen Teil des Filtersystems zu bilden. Durch das Zusammenwirken der Filtermembran mit etwa der Matrize der Portionskaffeemaschine wird die der Erzielung einer hohen Qualität geschuldete Feinabstimmung der Betriebsparameter der Portionskaffeemaschine, wie Wasserdruck und Fließwiderstand, den das Filtersystem dem Wasser entgegensetzt, ermöglicht.

Aus dem eigenen Stand der Technik der Anmelderin, der bis dato noch unveröffentlichten Patentanmeldung DE 10 2015 120 187.9, ist eine Einbringvorrichtung bekannt, mittels der das richtige Positionieren einer derartigen Filtermembran in einer Portionskaffeemaschine erleichtert wird. Die darin vorgestellte Erfindung basiert unter anderem darauf, dass die einzusetzende Filtermembran an ihren beiden Seiten einen Klebeauftrag aufweist, wobei einer zur Anbringung innerhalb der Portionskaffeemaschine bestimmt ist und der zweite zur lösbaren und nur zu der während des Einsetzvorganges temporären Fixierung der Filtermembran an der Einbringvorrichtung bestimmt ist. Letzterer zeichnet sich durch eine geringere Haftfestigkeit aus, so dass die Filtermembran an der Portionskaffeemaschine verbleibt und die Einbringvorrichtung möglichst mühelos entnommen werden kann. Vor dem Anbringen der einzusetzenden Filtermembran an der Einbringvorrichtung ist allerdings durch den Nutzer eine den Klebeauftrag schützende Folie von dem Klebeauftrag der Filtermembran abzuziehen.

Aufgabe der vorliegenden Erfindung ist es nun, eine ähnlich nutzerfreundliche Einbringvorrichtung bereitzustellen, die ein möglichst intuitives und schnelles, korrektes Positionieren einer Filtermembran an einer Portionskaffeemaschine mit möglichst wenigen für den Nutzer anfallenden Arbeitsschritten ermöglicht und gleichzeitig auf einen zweiten Klebeauftrag an der Filtermembran verzichtet.

Diese Aufgabe wird erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Einbringvorrichtung zum, insbesondere permanenten, Anbringen einer Filtermembran an ein Element, insbesondere eine Matrize, eines Heißgetränkesystems, insbesondere einer Portionskaffeemaschine, weist ein Halteelement mit wenigstens einer Aufnahmeeinrichtung bzw. Erfassungseinrichtung bzw. Befestigungseinrichtung auf, welche zum wenigstens zeitweisen Aufnehmen bzw. Erfassen bzw. Befestigen einer Filtermembran geeignet und bestimmt ist. Bevorzugt handelt es sich dabei um ein Aufnehmen bzw. Erfassen bzw. Befestigen, welches eine feste, aber lösbare Anordnung der Filtermembran an der Einbringvorrichtung ermöglicht. Bevorzugt ist die Filtermembran während des Einbringvorganges dieser in bzw. an ein Heißgetränkesystem an die Einbringvorrichtung, insbesondere temporär, anbringbar, wobei nach wenigstens bereichsweisen Anordnung der Filtermembran an ein Element des Heißgetränkesystems die Anordnung bzw. die Erfassung bzw. Befestigung der Filtermembran an der Einbringvorrichtung lösbar ist.

Unter der Filtermembran kann bevorzugt jedes an ein Heißgetränkesystem (permanent bzw. fest) anzubringendes Element verstanden werden, insbesondere ein an wenigstens einem Bereich flächig bzw. plan oder eben ausgestaltetes einzusetzendes Element. Bevorzugt handelt es sich bei der Filtermembran um eine Folie. Bei der Folie kann es sich etwa um eine Aluminiumfolie, eine Polypropylenfolie oder eine Verbundfolie handeln, die eine Dicke aus dem Bereich zwischen 10 µm und 250 µm, bevorzugt aus dem Bereich zwischen 10 µm und 80 µm, bevorzugt aus dem Bereich zwischen 20 µm und 120 µm, bevorzugt zwischen 30 µm und 120 µm und besonders bevorzugt zwischen 60 µm und 90 µm aufweist. Es kann sich aber auch um eine Filtermembran, an der bereits eine Matrize angeordnet ist, handeln.

Erfindungsgemäß weist die Aufnahmeeinrichtung bzw. Erfassungseinrichtung bzw. Befestigungseinrichtung wenigstens eine Ansaugeinrichtung auf, die zum, bevorzugt lösbaren, Aufnehmen bzw. Erfassen bzw. Befestigen bzw. Fixieren einer Filtermembran via Unterdruck geeignet und bestimmt ist. Bevorzugt ist die Aufnahmeeinrichtung bzw. Erfassungseinrichtung bzw. Befestigungseinrichtung in Zusammenwirkung mit einer planen bzw. glatten Fläche zur Ausbildung eines Unterdrucks geeignet.

Bevorzugt ist die Filtermembran alleine über den ausgebildeten Unterdruck an der Einbringvorrichtung (zumindest zeitweise fest) anbringbar bzw. fixierbar. Es können aber auch zusätzliche Klemmmittel und/oder Klebemittel und/oder Haftmittel vorgesehen sein, mittels derer die Filtermembran (unterstützend) an der Einbringvorrichtung angeordnet werden kann. Bevorzugt ist allerdings die Ansaugeinrichtung als einzige Fixiereinrichtung der Filtermembran an der Einbringvorrichtung vorgesehen. Bevorzugt ist die Aufnahmeeinrichtung bzw. Erfassungseinrichtung bzw. Befestigungseinrichtung derart ausgebildet, dass ein daran anhaftendes bzw. angeordnetes Element durch Aufhebung des Unterdrucks (gezielt, zu einem bestimmten Zeitpunkt) abgelöst werden kann.

In einer vorteilhaften Ausführungsform weist die Ansaugeinrichtung wenigstens einen Saugkopf, bevorzugt genau einen Saugkopf, und bevorzugt wenigstens zwei und besonders bevorzugt wenigstens drei Saugköpfe auf, dessen bzw. deren Querschnitt sich bevorzugt in eine Richtung, besonders bevorzugt stetig, flächig vergrößert. Bei dem Saugkopf bzw. bei den Saugköpfen kann es sich etwa um einen Saugnapf bzw. um Saugnäpfe handeln. Bevorzugt sind, sollten mehrere Saugköpfe vorgesehen sein, diese symmetrisch bezüglich einer Symmetrieachse des Halteelementes angeordnet.

Der Saugnapf kann Kunststoffe, bevorzugt flexible Kunststoffe und/oder PVC aufweisen und bevorzugt besteht er wenigstens abschnittsweise und besonders bevorzugt vollständig aus PVC. Bevorzugt besteht der Saugnapf aus einem flexiblen Kunststoff. Bevorzugt besteht der Saugkopf aus einem lebensmittelechten Material. Bevorzugt weist der Saugkopf eine Materialstärke aus einem Bereich zwischen 0.1 mm und 1.5 mm, bevorzugt zwischen 0.3 mm und 0.8 mm auf. Bevorzugt ist diese Stärke derart an die Elastizität und die Ausgestaltung des Saugkopfes angepasst, dass ein gewünschter Unterdruck, der wiederum bevorzugt an den durch das Heißgetränkesystem erzielbaren Wasserdruck angepasst ist, erzielt werden kann. Bevorzugt lässt sich der durch den Saugnapf erzielbare Unterdruck durch den Wasserdruck, der durch das Beaufschlagen des Halteelementes bzw. der Einbringvorrichtung durch das Heißgetränkesystem erzielt wird, lösen bzw. überwinden.

Bei dem Saugkopf bzw. dem Saugnapf handelt es sich bevorzugt um ein napfartiges bzw. napfförmiges Gebilde aus bevorzugt elastischem Material. Der Saugnapf bzw. der Saugkopf ist bevorzugt dazu geeignet und bestimmt, dass er beim Anpressen gegen eine glatte Fläche (zumindest teilweise) eingedrückt und ein Teil der zuvor umschlossenen Luft verdrängt wird, wodurch ein Unterdruck in einem Hohlraum zwischen dem Saugnapf und der glatten Fläche im Vergleich zum Umgebungsluftdruck entsteht.

In einer weiteren vorteilhaften Ausführungsform weist der Querschnitt des wenigstens einen Saugkopfes (Saugnapfes) und bevorzugt um den aller Saugköpfe (Saugnäpfe) einen maximalen Durchmesser von 8 cm, bevorzugt von 6 cm, bevorzugt von 5 cm, bevorzugt von 3.5 cm, bevorzugt von 3 cm und besonders bevorzugt von 2.5 cm und/oder einen minimalen Durchmesser von 0.5 cm, bevorzugt von 1 cm, bevorzugt von 1.5 cm und besonders bevorzugt von 2 cm auf. Bevorzugt weist der Saugnapf bzw. der Saugkopf eine Höhe (vertikale Ausdehnung) von maximal 1 cm, bevorzugt 8 mm und besonders bevorzugt 5 mm auf.

In einer weiteren vorteilhaften Ausführungsform ist die Aufnahmeeinrichtung bzw. Erfassungseinrichtung bzw. Befestigungseinrichtung und damit auch die Ansaugeinrichtung in eine vorgegebene insbesondere lineare Richtung (bevorzugt vertikal) bewegbar gegenüber dem Halteelement ausgebildet. Dabei kann ein Ende der Aufnahmeeinrichtung bzw. Erfassungseinrichtung (bzw. Befestigungseinrichtung) ein Bedienelement aufweisen, mittels welchem der Nutzer die Ansaugeinrichtung manuell gegenüber dem Halteelement bewegen kann. Bevorzugt kann eine derartige Bewegung auch durch das Spannen des Pressstockes des Heißgetränkesystems bei darin eingelegter Einbringvorrichtung erfolgen. Bevorzugt ist die Aufnahmeeinrichtung bzw. Erfassungseinrichtung (bzw. Befestigungseinrichtung) gegenüber dem Halteelement höchstens 1 cm, bevorzugt höchstens 8 mm und besonders bevorzugt höchstens 5 mm auslenkbar bzw. verschiebbar bzw. bewegbar.

Denkbar ist aber auch, dass die Aufnahmeeinrichtung bzw. Erfassungseinrichtung bzw. Befestigungseinrichtung und damit auch die Ansaugeinrichtung nicht bewegbar gegenüber dem Halteelement ausgebildet ist, d.h. fest gegenüber dem Halteelement angeordnet ist. Bevorzugt ragt dann (wenigstens) ein Saugkopf bzw. Saugnapf (und bevorzugt alle Saugköpfe bzw. Saugnäpfe) wenigstens abschnittsweise aus dem Halteelement heraus.

In einer weiteren vorteilhaften Ausführungsform ist das Halteelement kapselartig, bevorzugt topfartig bzw. bevorzugt topfförmig, bevorzugt napfartig und besonders bevorzugt kegelstumpfartig ausgebildet. Bevorzugt ist das Halteelement zumindest abschnittsweise und bevorzugt im Wesentlichen der äußeren Form einer Einweg-Kapsel, die für das Heißgetränkesystem bestimmt ist, nachgebildet. Bevorzugt bildet das Halteelement im Wesentlichen die äußere Ausgestaltung der Einbringvorrichtung und besonders bevorzugt bestimmt das Halteelement die äußeren Abmessungen der Einbringvorrichtung. Bevorzugt bildet das Halteelement die äußere Hülle der Einbringvorrichtung aus. Eine kapselartige Ausgestaltung des Halteelementes und damit der Einbringvorrichtung bietet den Vorteil, dass die Einbringvorrichtung in den Pressstock des Heißgetränkesystems eingelegt werden kann und dieser auch mit darin befindlicher Einbringvorrichtung gespannt werden kann.

Bevorzugt weist das Halteelement an seinem oberen Rand einen kragenartigen, besonders bevorzugt umlaufenden Vorsprung auf. Durch eine damit erzielte äußere Nachbildung einer Einwegkapsel kann das Halteelement vorteilhaft als Zentrierelement zur gezielten Anbringung der Filtermembran auf einem vorbestimmten Bereich des Heißgetränkesystems, etwa auf einer Matrize des Heißgetränkesystems verwendet werden. Dies erlaubt eine exakte Positionierung an einer gewünschten Stelle des Heißgetränkesystems, was wiederum ein zuverlässiges und reibungsloses Zusammenwirken der eingesetzten Filtermembran mit wiederverwendbaren Kapseln (insbesondere unverschlossenen Kapseln bzw. nach oben hin offenen Kapseln bzw. Kapseln ohne Deckel) ermöglicht.

Bevorzugt ist eine Führungseinrichtung zur Führung der Einbringvorrichtung bzw. zur Führung des Halteelementes (und/oder der Aufnahmeeinrichtung) während der Aufnahme einer Filtermembran vorgesehen, welche bevorzugt einen Bereich aufweist, der wenigstens abschnittsweise einem kreislinienförmigen Verlauf folgt. Bevorzugt ist die Führungseinrichtung zum Führen eines kragenartig, besonders bevorzugt umlaufenden Vorsprungs bzw. des Kragens des Halteelementes geeignet und bestimmt. Eine derartige Führungseinrichtung erleichtert wiederum eine eindeutige und präzise Anordnung der Filtermembran an der Ansaugeinrichtung, was wiederum Voraussetzung für eine präzise Anordnung der Filtermembran an dem Element des Heißgetränkesystems, insbesondere einer Matrize, ist. Bevorzugt kann in die Führungseinrichtung die Filtermembran eingebracht bzw. eingelegt werden. Besonders bevorzugt weist diese Führungseinrichtung eine Ausnehmung auf, welche bevorzugt kreisförmig ausgebildet ist und in welche die Filtermembran eingelegt bzw. angeordnet werden kann. Bevorzugt schränkt die Führungseinrichtung die Bewegung der Filtermembran in einem Zustand, in dem die Filtermembran auf ihr angeordnet ist, in wenigstens zwei und bevorzugt in genau zwei zueinander senkrecht stehenden Richtungen ein. Bevorzugt ist die Führungseinrichtung dazu geeignet und bestimmt, während der Aufnahme einer auf ihr angeordneten Filtermembran durch die Einbringvorrichtung, die Bewegung der Einbringvorrichtung in wenigstens zwei und bevorzugt in genau zwei zueinander senkrecht stehenden Richtungen, bevorzugt in eine horizontale Richtung und besonders bevorzugt in einer horizontalen Ebene, einzuschränken. Bevorzugt entspricht die geometrische Dimension dieser Ausnehmung im Wesentlichen dem äußeren Umfang des Kragens des Halteelementes bzw. ist an einen äußeren Umfang des Halteelementes angepasst.

Bevorzugt bildet das Halteelement einen Hohlraum aus, in dessen Inneren wenigstens abschnittsweise und bevorzugt wenigstens zeitweise vollständig die Ansaugeinrichtung bzw. Aufnahmeeinrichtung bzw. Erfassungseinrichtung (bzw. Befestigungseinrichtung) eingebracht bzw. angeordnet ist. Bevorzugt ist das Halteelement rotationssymmetrisch ausgestaltet. Bevorzugt ist die Aufnahmeeinrichtung bzw. Erfassungseinrichtung (bzw. Befestigungseinrichtung) bzw. die Ansaugeinrichtung über ein Befestigungselement an dem Halteelement angeordnet. Bevorzugt ist das Halteelement hohlzylinderartig ausgebildet. Bevorzugt ist mittig bzw. zentral in dem Inneren des Befestigungselements (und besonders bevorzugt auch zentral in dem Inneren des Halteelementes vorteilhaft entlang der Rotationsachse des Halteelementes) die Aufnahmeeinrichtung bzw. Erfassungseinrichtung (bzw. Befestigungseinrichtung) und hierüber bevorzugt auch die Ansaugeinrichtung angeordnet. Bevorzugt ist die Aufnahmeeinrichtung bzw. Erfassungseinrichtung (bzw. Befestigungseinrichtung) und damit bevorzugt auch die Ansaugeinrichtung in Richtung der (Zylinder-)Achse der hohlzylinderartigen Ausgestaltung des Befestigungselements (axial, was obig bezeichneter vertikaler Richtung entspricht) bewegbar.

Bevorzugt ist wenigstens ein Anschlag vorgesehen, der die relative Bewegung der Aufnahmeeinrichtung bzw. Erfassungseinrichtung (bzw. Befestigungseinrichtung) und/oder der Ansaugeinrichtung gegenüber dem Halteelement in wenigstens eine Richtung und bevorzugt in genau eine Richtung begrenzt. Bevorzugt fungiert das Befestigungselement, das die Aufnahmeeinrichtung bzw. Erfassungseinrichtung (bzw. Befestigungseinrichtung) an dem Halteelement anordnet bzw. befestigt, zugleich als Anschlag. Bevorzugt ist wenigstens ein weiterer Anschlag vorgesehen, der die relative Bewegung der Aufnahmeeinrichtung bzw. Erfassungseinrichtung (bzw. Befestigungseinrichtung) und/oder der Ansaugeinrichtung gegenüber dem Halteelement in wenigstens eine weitere Richtung, die vorzugsweise genau entgegengesetzt ist zu der von einem ersten Anschlag begrenzten Richtung ist, und bevorzugt in genau eine Richtung begrenzt. Bevorzugt wirkt das Befestigungselement für die Aufnahmeeinrichtung bzw. Erfassungseinrichtung (bzw. Befestigungseinrichtung) in zwei einander entgegengesetzte Richtungen jeweils als Anschlag. Bevorzugt ist relativ zu dem Befestigungselement das Bedienelement der Aufnahmeeinrichtung bzw. Erfassungseinrichtung (bzw. Befestigungseinrichtung) auf der einen Seite des Befestigungselementes und wenigstens ein Saugnapf auf der anderen Seite des Befestigungselementes angeordnet.

In einer weiteren vorteilhaften Ausführungsform weist die Einbringvorrichtung wenigstens ein, bevorzugt genau ein Federelement auf, durch welches bevorzugt die Aufnahmeeinrichtung und/oder die Ansaugeinrichtung relativ zu dem Halteelement vorgespannt werden kann. Bevorzugt wird durch das Federelement eine wenigstens abschnittsweise und bevorzugt vollständige Anordnung der Ansaugeinrichtung (bzw. wenigstens eines Saugnapfes/Saugkopfes) innerhalb des Halteelementes bzw. in dem durch das Halteelement begrenzten Hohlraum bewirkt. Bevorzugt wird durch die Federkraft die Ansaugeinrichtung bzw. wenigstens ein Saugnapf/Saugkopf bevorzugt vollständig innerhalb des Halteelementes bzw. in dem durch das Halteelement begrenzten Hohlraum gehalten. Durch Überwindung der Federkraft ist die Ansaugeinrichtung bzw. wenigstens ein Saugnapf wenigstens teilweise und bevorzugt vollständig (bzw. zumindest noch weiter) aus dem Halteelement herausführbar.

Dies bietet den Vorteil, dass hierdurch eine gezielte Aufnahme und dann auch Demontage/Ablösung des Filterelementes möglich ist. Bevorzugt kann als Federelement, besonders bevorzugt für die Federelemente, eine Spiralfeder vorgesehen sein. Denkbar sind aber grundsätzlich auch andere (kompressible) Elemente, die eine Rückstellkraft erzeugen. Bevorzugt kann etwa als Federelement auch ein Schaum, etwa ein Kautschukschaum, ein Polyurethanschaum und/oder ein Element aus Silikon verwendet werden.

Bevorzugt ist wenigstens ein Federelement zwischen dem Bedienelement der Aufnahmeeinrichtung bzw. Erfassungseinrichtung (bzw. Befestigungseinrichtung) und dem Befestigungselement angeordnet. Bevorzugt kann durch (manuelles) Stauchen des Federelementes bzw. durch Überwindung der Federrückstellkraft die Ansaugeinrichtung und damit bevorzugt auch wenigstens ein Saugkopf bzw. wenigstens ein Saugnapf in Richtung aus dem Halteelement heraus bewegt werden und bevorzugt ist eine derartige Anordnung möglich, dass wenigstens ein Abschnitt wenigstens eines Saugkopfes bzw. Saugnapfes aus dem Halteelement herausragen kann, vorteilhaft allerdings um weniger als 5 mm, bevorzugt 3 mm und besonders bevorzugt 2 mm. Damit wird vorteilhaft die Aufnahme bzw. das Erfassen bzw. das Befestigen bzw. das Anordnen eines Filterelementes bzw. einer Filtermembran erleichtert bzw. ermöglicht. Bevorzugt ist wenigstens ein Bereich des durch das Halteelement begrenzten Hohlraums zylinderförmig. Bevorzugt ist wenigstens ein Bereich und besonders bevorzugt ein weiterer Bereich des durch das Halteelement begrenzten Hohlraums kegelstumpfartig bzw. kegelstumpfförmig.

In einer weiteren vorteilhaften Ausführungsform weist die Einbringvorrichtung wenigstens einen Luftkanal und/oder wenigstens eine Luftleitung zur Beeinflussung eines von der Ansaugeinrichtung erzeugten Unterdrucks auf. Dies bietet den Vorteil, dass auf diese Weise eine schnelle Ablösung des Federelementes von der Aufnahmeeinrichtung bzw. Erfassungseinrichtung (bzw. Befestigungseinrichtung) bzw. von der wenigstens einen Ansaugeinrichtung und bevorzugt von allen Ansaugeinrichtungen herbeigeführt werden kann. Bevorzugt ist über diesen Luftkanal bzw. über diese Luftkanäle das unter dem durch die Ansaugeinrichtung erzeugten Unterdruck stehende Luftvolumen mit der Umgebungsluft bzw. Atmosphäre verbindbar. Denkbar wäre auch, dass über diesen Luftkanal bzw. diese Luftkanäle nicht nur der Unterdruck wieder gelöst und auf normalen Luftdruck gebracht werden kann, sondern auch ein Unterdruck erzeugt oder dieser erhöht werden kann.

In einer weiteren vorteilhaften Ausführungsform der Einbringvorrichtung ist das Material des Halteelementes und/oder des Befestigungselementes ausgewählt aus einer Gruppe, die (massives) Metall, Edelstahl, V2A, Aluminium, magnetisches oder unmagnetisches Metall, Titanlegierungen, harte Kunststoffe, Polypropylen, Polysaccharid, Monosaccharid, Zucker, Maisstärke, Presspappe, Holz, kompostierbarer Kunststoff, biodegradable Materialien, Faserverbundwerkstoffe, wasserlösliche Feststoffe und Kombinationen hieraus enthält.

In einer weiteren vorteilhaften Ausführungsform weist das Halteelement eine Höhe und/oder die Einbringvorrichtung eine vertikale Ausdehnung von wenigstens 0.5 cm, bevorzugt wenigstens 1 cm, bevorzugt wenigstens 1.5 cm und besonders bevorzugt von wenigstens 2 cm und/oder eine Höhe von maximal 5 cm, bevorzugt maximal 3 cm und besonders bevorzugt maximal 2.5 cm auf. Dabei beschreibt die Höhe eine Ausdehnung in eine vertikale Richtung. In einer weiteren vorteilhaften Ausführungsform weist das Halteelement eine horizontale Ausdehnung und/oder die Einbringvorrichtung eine horizontale Ausdehnung von wenigstens 1.5 cm, bevorzugt von wenigstens 2 cm, bevorzugt wenigstens von 2.5 cm und besonders bevorzugt von wenigstens 3.5 cm und/oder eine horizontale Ausdehnung von maximal 8 cm, bevorzugt maximal 6 cm, bevorzugt maximal 6,5 cm, bevorzugt maximal 5 cm, bevorzugt maximal 4.5 cm und besonders bevorzugt maximal 4 cm auf.

Bevorzugt weist die Einbringvorrichtung wenigstens einen und bevorzugt mehrere kanalartige Beaufschlagungshohlräume auf, welche sich besonders bevorzugt durch das Halteelement selbst und/oder durch das Befestigungselement oder aber durch beide erstrecken. Bevorzugt sind diese kanalartigen Beaufschlagungshohlräume (bzw. Beaufschlagungshohlraum) dazu geeignet und bestimmt, mit einem fließfähigen Medium, insbesondere Wasser, beaufschlagt zu werden und dieses fließfähige Medium (Wasser) von einer Seite des Halteelementes auf eine bevorzugt entgegengesetzte Seite des Halteelementes zu führen. Bevorzugt kann mittels einem Beaufschlagungshohlraum und bevorzugt mittels den Beaufschlagungshohlräumen damit fließfähiges Medium (Wasser) in den Hohlraum des Halteelementes geleitet bzw. geführt werden, bevorzugt in einen Hohlraum zwischen der Innenwandung des Halteelementes und der Ansaugeinrichtung bzw. einem Saugkopf. Bevorzugt kann damit durch Beaufschlagen mindestens eines Beaufschlagungshohlraumes mit fließfähigem Medium (Wasser) dieses fließfähige Wasser an eine an der Aufnahmeeinrichtung bzw. Ansaugeinrichtung aufgenommene bzw. angeordnete Filtermembrane herangeführt werden. Erfolgt dieses unter ausreichendem Druck, kann damit die Filtermembrane von der Ansaugeinrichtung unter Überwindung des Unterdrucks wieder gelöst bzw. entfernt werden.

Denkbar ist auch eine Einbringvorrichtung, die dazu geeignet und bestimmt ist, eine Filtermembran anstelle via Unterdruck mittels magnetischer Kraftwirkung aufzunehmen. Die vorliegende Erfindung ist daher weiterhin auf eine Einbringvorrichtung zum, insbesondere permanenten, Anbringen einer Filtermembran an ein Element, insbesondere eine Matrize, eines Heißgetränkesystems, insbesondere einer Portionskaffeemaschine, gerichtet, die ein Halteelement mit wenigstens einer Aufnahmeeinrichtung bzw. Erfassungseinrichtung bzw. Befestigungseinrichtung aufweist, welche zum wenigstens zeitweisen Aufnehmen bzw. Erfassen bzw. Befestigen einer Filtermembran geeignet und bestimmt ist, bei der die Aufnahmeeinrichtung wenigstens einen Magneten, bevorzugt einen Permanentmagneten, aufweist, die zum Aufnehmen einer Filtermembran mittels magnetischer Kraftwirkung geeignet und bestimmt ist. Diese Einbringvorrichtung kann dabei mit allen in der Beschreibung im Kontext mit der obig beschriebenen Einbringvorrichtung beschriebenen Merkmalen bzw. allen möglichen Kombinationen hieraus ausgestattet sein. Der Erfinder behält sich vor, auch eine solche Einbringvorrichtung zu beanspruchen.

Die vorliegende Erfindung ist weiterhin gerichtet auf ein Verfahren zum, insbesondere permanenten, mechanischen Anbringen einer Filtermembran an ein zu ergänzendes Element, bevorzugt an eine Matrize, eines Heißgetränkesystems, insbesondere einer Portionskaffeemaschine, mittels einer Einbringvorrichtung aufweisend ein Halteelement mit wenigstens einer Aufnahmeeinrichtung bzw. Erfassungseinrichtung bzw. Befestigungseinrichtung, welches zum wenigstens zeitweisen Aufnehmen bzw. Erfassen bzw. Befestigen einer Filtermembran geeignet und bestimmt ist, wobei die Aufnahmeeinrichtung bzw. Erfassungseinrichtung (bzw. Befestigungseinrichtung) wenigstens eine Ansaugeinrichtung aufweist, die zum Aufnehmen bzw. Erfassen bzw. Befestigen (bzw. Anordnen bzw. Fixieren) einer Filtermembran via Unterdruck geeignet und bestimmt ist.

Das erfindungsgemäße Verfahren umfasst die Schritte des Aufnehmens bzw. Erfassens bzw. Befestigens bzw. Anordnens einer Filtermembran via Unterdruck mittels der Einbringvorrichtung, des Anordnens bzw. des Anbringens bzw. des Befestigens bzw. des Platzierens und/oder bevorzugt des Fixierens der Filtermembran an das zu ergänzende Element, bevorzugt die Matrize, des Heißgetränkesystems via Anordnen wenigstens eines Bereiches der Filtermembran an das zu ergänzende Element die Matrize des Heißgetränkesystems bevorzugt in einem nachfolgenden Schritt und bevorzugt durch Lösen des Unterdrucks besonders bevorzugt in einem weiteren nachfolgenden Schritt.

Dabei kann dieses Verfahren mit allen in der Beschreibung, im Kontext mit der Einbringvorrichtung beschriebenen Merkmalen bzw. allen möglichen Kombinationen hieraus ausgestattet sein.

In einer vorteilhaften Ausführungsform umfasst das Verfahren das Einlegen der Einbringvorrichtung in einen Pressstock des Heißgetränkesystems und bevorzugt ein Anpressen der Filtermembran an das zu ergänzende Element die Matrize des Heißgetränkesystems, bevorzugt durch Spannen des Pressstocks des Heißgetränkesystems und/oder bevorzugt durch Beaufschlagung der Einbringvorrichtung mit Wasser, und zudem bevorzugt das Öffnen des Pressstocks und Entfernen der Einbringvorrichtung, bevorzugt mit oder ohne vorherige Wasserbeaufschlagung der Einbringvorrichtung, vorzugsweise mit (vorheriger) Wasserbeaufschlagung der Einbringvorrichtung. Bevorzugt kann aber auch die Einbringvorrichtung zusammen mit einer daran angeordneten Filtermembran in den Pressstock eingelegt werden, dieser gespannt werden und anschließend bevorzugt sowohl die Einbringvorrichtung als auch die Filtermembran mit Wasser beaufschlagt werden (mittels des Heißgetränkesystems). Dies bietet den Vorteil, dass mittels des die Filtermembran gegen das Heißgetränkesystem drückende Wasserdrucks eine stärke Fixierung der Filtermembran an dem Heißgetränkesystem ermöglichen kann. Denkbar ist auch, dass durch die Beaufschlagung mit Wasser eine Ablösung der Filtermembran von der Einbringvorrichtung erleichtert oder sogar bewirkt wird. Das unter Unterdruck stehende, von der Einbringvorrichtung bewirkte Luftvolumen (zwischen der Ansaugeinrichtung und der Filtermembran) wird bevorzugt mit gasförmigem Medium beaufschlagt, vorzugsweise mit Luft, bzw. mit der Umgebungsluft verbunden, bevorzugt um eine gezielte und schnelle Ablösung der Filtermembran von der Einbringvorrichtung zu erzielen.

Bevorzugt umfasst das Verfahren das Andrücken der Filtermembran an ein Element, insbesondere an eine Matrize, eines Heißgetränkesystems durch Beaufschlagung der Filtermembran mit (unter Wasserdruck) befindlichem Wasser. Bevorzugt entspricht diese Beaufschlagung mit Wasser genau der Beaufschlagung, mit der eine für das Heißgetränkesystem angedachte (Einweg-)Kapsel mit Wasser beaufschlagt wird. Vorteilhaft kann also im Wesentlichen derselbe Vorgang (der Wasserbeaufschlagung), mit dem ansonsten Kaffee aufgebrüht wird, zur Anordnung und anschließenden (permanenten) Fixierung der Filtermembran an einem Element des Heißgetränkesystems verwendet werden. Bevorzugt erfolgt durch den Beaufschlagungsvorgang mit Wasser zunächst ein Andrücken bzw. Anpressen der Filtermembran an das Element, bevorzugt die Matrize, des Heißgetränkesystems, wodurch sich insbesondere die (zuvor im Wesentlichen eben ausgestaltete) Filtermembran an Vorsprünge des Elementes bzw. der Matrize anschmiegt bzw. anpasst bzw. entsprechend dieser verformt. Hierdurch entstehen bevorzugt wenigstens abschnittsweise und bevorzugt in dem Gesamten an dem Element bzw. der Matrize anliegenden Bereich wellenartige bzw. kegelartige bzw. kegelstumpfartige Verformungen bzw. Erhöhungen der Filtermembran. Bevorzugt wird durch ein Anpassen der Matrize an Vorsprünge des Elementes und bevorzugt der Matrize der Unterdruck gelöst. Hierdurch wird bevorzugt eine Ablösung der Filtermembran von dem Halteelement erreicht. Bevorzugt erfolgt das Lösen der Filtermembran von dem Halteelement bzw. der Einbringvorrichtung und/oder das permanente Anbringen der Filtermembrane an dem Element, bevorzugt der Matrize, des Heißgetränkesystems durch (Wasser-)Druck bei eingeschalteter Maschine bzw. eingeschaltetem Heißgetränkesystem. Durch dieses vorgeschlagene Verfahren kann sowohl ein hoher Kundenkomfort hinsichtlich der Bedienung als auch eine hohe Sicherheit der Anbringung realisiert werden.
Bevorzugt erfolgt die Beaufschlagung der Filtermembran wenigstens teilweise und bevorzugt im Wesentlichen vollständig durch das Halteelement hindurch, bevorzugt durch wenigstens einen und besonders bevorzugt durch mehrere Kanäle des Halteelementes hindurch. Bevorzugt wird damit durch diese Beaufschlagung die Filtermembran mit Druck gegen das Element des Heißgetränkesystems gepresst. Bevorzugt wird durch dieses Anpressen ein Kraftschluss zwischen der Filtermembrane und dem Element, bevorzugt der Matrize, des Heißgetränkesystems erzeugt. Bevorzugt handelt es sich bei diesem Kraftschluss um eine durch Klebkraft erzeugte Haftung. Hierzu kann an wenigstens einem Bereich der Filtermembran ein Klebstoffauftrag vorgesehen sein. Vorzugsweise eignet sich hierzu ein (im Wesentlichen), wenigstens abschnittsweise und bevorzugt umlaufender, kreisringförmig aufgebrachter Klebstoffauftrag.

In einer weiteren vorteilhaften Ausführungsform umfasst das Verfahren das Lösen bzw. das Aufheben des Unterdrucks durch Spannen des Pressstocks der Portionskaffeemaschine. Denkbar ist aber auch, dass der Unterdruck manuell bzw. mechanisch (durch den Benutzer) aufgehoben wird, bevorzugt durch seitliches Abziehen der Einbringvorrichtung oder durch Verkippen der Einbringvorrichtung relativ zu der Filtermembran, bevorzugt sobald diese fest an dem Heißgetränkesystem und vorzugsweise an dessen Matrize angeordnet ist. Denkbar ist aber auch, dass der Bediener die Einbringvorrichtung bzw. das Halteelement bzw. den Saugkopf bzw. die Ansaugeinrichtung von der Filtermembran mittels einem an dem Saugkopf bzw. der Ansaugeinrichtung angebrachte Anguss bzw. einer Lasche durch manuelles Abziehen löst.

Bevorzugt umfasst die Aufnahme der Filtermembran mittels der Einbringvorrichtung ein Führen der Einbringvorrichtung, bevorzugt des Halteelementes, insbesondere in einer horizontalen Richtung, besonders bevorzugt Ebene, d.h. bevorzugt in einer zu einer (axialen) Beweglichkeit der Aufnahmeeinrichtung bzw. der Erfassungseinrichtung bzw. der Befestigungseinrichtung senkrechten Richtung und bevorzugt einer senkrechten Ebene. Bevorzugt umfasst dies eine Führung eines Kragens des Halteelementes. Bevorzugt wird hierzu eine wenigstens abschnittsweise einem kreislinienförmigen Verlauf folgende Führungseinrichtung, in das besonders bevorzugt die Filtermembran eingebracht bzw. eingelegt ist, zur Führung des Halteelementes verwendet. Bevorzugt weist diese Führungseinrichtung eine Ausnehmung auf, welche bevorzugt kreisförmig ausgebildet ist. Bevorzugt entspricht die geometrische Dimension dieser Ausnehmung im Wesentlichen dem äußeren Umfang des Kragens des Halteelementes bzw. ist an einen äußeren Umfang des Halteelementes angepasst.

In einer weiteren vorteilhaften Ausführungsform umfasst das Verfahren das Aufheben des von der Ansaugeinrichtung erzeugten Unterdrucks via Beaufschlagen des unter Unterdruck stehenden Bereiches mit einem gasförmigen Medium, bevorzugt via wenigstens einem Luftkanal und/oder wenigstens einer Luftleitung der Einbringvorrichtung.

Weitere Vorteile und Ausführungsformen ergeben sich aus der beigefügten Zeichnung. Darin zeigt:
- Fig. 1: eine schematische Querschnittsdarstellung einer Ausführungsform einer erfindungsgemäßen Einbringvorrichtung; und
- Fig. 2: eine Darstellung der Ausführungsform einer erfindungsgemäßen Einbringvorrichtung in Draufsicht.

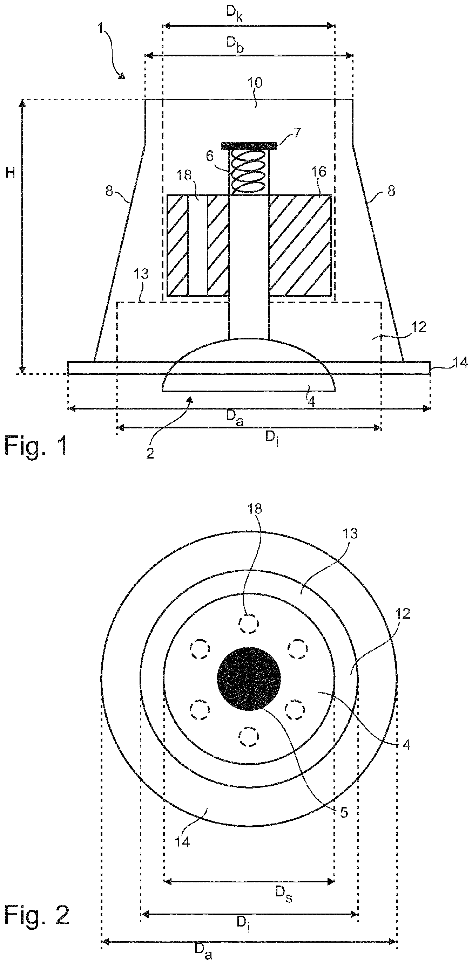

In Fig. 1 ist eine schematische Querschnittsdarstellung einer Ausführungsform einer erfindungsgemäßen Einbringvorrichtung 1. Sie weist ein in der äußeren Gestaltung kapselartiges bzw. bevorzugt einer Einweg-Kapsel nachgebildetes Halteelement 10, welches an seinem oberen Ende bzw. an seiner oberen Kante (in Fig. 1 das untere Ende) einen umlaufenden (bevorzugt kragenartigen) Vorsprung 14 aufweist. Die äußere Wandung 8 weist dabei bevorzugt einen kegelstumpfartigen bzw. kegelstumpfförmigen und/oder zylinderförmigen Bereich auf. Das Halteelement 10 begrenzt durch eine umlaufende Wandung 8 einen sich in eine vertikale (in Figurenebene von unten nach oben zeigende) Richtung erstreckenden Hohlraum 12. Dieser Hohlraum 12 kann wenigstens einen zylinderförmigen Abschnitt 13 aufweisen und bevorzugt zwei zylinderförmige Abschnitte unterschiedlichen Durchmessers aufweisen. Bevorzugt weist der obere zylinderförmige Abschnitt 13 (in Fig. 1 der untere) einen größeren Durchmesser Di verglichen mit dem Durchmesser Dk des unteren zylinderförmigen Abschnitts (in Fig. 1 der obere) auf.

An dem Halteelement 10 ist, bevorzugt in dem Hohlraum 12, über ein bevorzugt hohlzylindrisch ausgestaltetes Befestigungselement 16 (in Fig. 1 schraffiert dargestellt) eine Aufnahmeeinrichtung 2 angeordnet. Diese weist eine Ansaugeinrichtung 4, bevorzugt in Form eines Saugnapfes auf, welche bevorzugt aus elastischem Material besteht. Die Ansaugeinrichtung 4 bzw. der Saugnapf ist bevorzugt über ein stangenartiges Element mit einem Bedienelement 7 verbunden, welches sich bevorzugt auf einer anderen Seite des Befestigungselementes 16 befindet. Dabei befindet sich bevorzugt das stangenartige Element, welches das Bedienelement 16 und die Ansaugeinrichtung 4 miteinander verbindet, wenigstens abschnittsweise in einem von dem Befestigungselement 16 begrenzten, bevorzugt zylindrischen Hohlraum. Durch Drücken auf das Bedienelement 7 kann der Saugnapf (die Ansaugeinrichtung 4) gegen eine plan ausgestaltete Oberfläche wie etwa diejenige einer Filtermembran gepresst werden und hierdurch ein Unterdruck erzeugt werden. Dazu kann die Ansaugeinrichtung 4 bzw. der Saugnapf wenigstens abschnittsweise aus dem Halteelement 10 herausbewegt werden. Die Aufnahmeeinrichtung 2 weist darüber hinaus ein Federelement 6 auf, durch welches die Ansaugeinrichtung 4 bzw. die Aufnahmeeinrichtung 2 vorgespannt wird (gegenüber dem Halteelement 10). Bevorzugt weist das Befestigungselement 16 einen Dichtungsring auf, mittels welchem es gegenüber dem Halteelement 10 abgedichtet und/oder reibschlüssig angeordnet ist. Hierfür kann das Befestigungselement 16 eine umlaufende Nut aufweisen, in die dieser Dichtungsring zumindest teilweise eingebracht ist.

Weiterhin ist es möglich, dass die Einbringvorrichtung 1 und insbesondere auch das Befestigungselement 16 Bohrungen 18 bzw. Luftkanäle 18 aufweist, mittels welchen der durch die Ansaugeinrichtung 4 erzeugte Unterdruck wieder aufgehoben werden kann, in etwa durch Verbindung mit der Umgebungsluft und damit Herstellen des Umgebungsluftdrucks. Bohrungen 18 bzw. Luftkanäle 18 können aber auch dazu dienen, dass bei Beaufschlagung der Einbringvorrichtung 1 mit Wasser (wie etwa in der Portionskaffeemaschine) das Wasser von der einen Seite des Befestigungselementes 16 zur anderen Seite hin durchtreten kann. Auch hierdurch kann etwa die Filtermembran an ein Element der Portionskaffeemaschine/des Heißgetränkesystems wie etwa einer Matrize stärker angepresst bzw. angeordnet werden.

Bevorzugt ist der Durchmesser Da des umlaufenden Vorsprungs des Halteelements 10 wenigstens 2 cm, bevorzugt wenigstens 3 cm und besonders bevorzugt wenigstens 3.5 cm und höchstens 5 cm, bevorzugt höchstens 4.5 cm und besonders bevorzugt höchstens 4 cm. Die vertikale Ausdehnung H des Halteelementes 10 und bevorzugt damit auch der gesamten Einbringvorrichtung 1 bewegt sich vorteilhaft in dem Bereich zwischen 1 cm und 5 cm, bevorzugt zwischen 2 cm und 3 cm. Der Durchmesser Di des oberen zylindrischen Abschnittes 13 ist vorteilhaft gewählt aus dem Bereich zwischen 2 cm und 4 cm und besonders vorteilhaft aus dem Bereich zwischen 2.5 cm und 3 cm. Der Durchmesser Db des Bodens des Halteelementes 10 (der unteren Kante, d.h. in Fig. 1 der oberen Kante) ist vorteilhaft gewählt aus dem Bereich zwischen 1 cm und 3 cm und bevorzugt aus dem Bereich zwischen 1.5 cm und 2.5 cm. Schließlich ist bevorzugt der Durchmesser eines unteren (in Fig. 1 oberen) zylinderförmigen Bereiches des Hohlraumes 12 gewählt aus dem Bereich zwischen 1 cm und 3 cm und bevorzugt aus dem Bereich zwischen 1.5 cm und 2.5 cm.

Fig. 2 zeigt eine Darstellung der in Fig. 1 gezeigten Ausführungsform einer erfindungsgemäßen Einbringvorrichtung 1 in Draufsicht (von oben). Das Bezugszeichen 4 kennzeichnet wiederum eine Ansaugeinrichtung als Saugnapf, welche aus bevorzugt flexiblem und auch aus transparentem Material hergestellt sein kann, so dass die darunter befindlichen Bohrungen 18 bzw. Luftkanäle 18 in dem Befestigungselement 16 durch die Ansaugeinrichtung 4 hindurch erkannt werden können. Das Bezugszeichen 5 kennzeichnet ein weiteres Befestigungselement, mittels welchem die Ansaugeinrichtung 4 an dem Bedienelement 7 verbunden sein kann und welches etwa stangenartig ausgebildet sein kann. Das Bezugszeichen 13 zeigt in Fig. 2 einen Bodenabschnitt eines zylindrischen oberen Bereiches eines Hohlraumes 12. Der Durchmesser des Saugnapfes bzw. der Ansaugeinrichtung 4 ist bevorzugt gewählt aus dem Bereich zwischen 1 cm und 3 cm, bevorzugt aus dem Bereich zwischen 1.5 cm und 2.5 cm und besonders bevorzugt gewählt aus dem Bereich zwischen 1.8 cm und 2.4 cm. Zu erkennen ist außerdem der umlaufende Vorsprung 14 des Halteelementes 10. Bevorzugt kann eine Einbringvorrichtung 1 mehrere Luftkanäle 18 bzw. Bohrungen 18 aufweisen, bevorzugt mehr als zwei, bevorzugt mehr als drei, bevorzugt mehr als vier, bevorzugt mehr als fünf und besonders bevorzugt sechs. Bevorzugt liegen jeweils zwei hinsichtlich einer Symmetrieachse einander diametral gegenüber.

Der Anmelder behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste:

- 1: Einbringvorrichtung
- 2: Aufnahmeeinrichtung
- 4: Ansaugeinrichtung
- 5: Befestigungselement
- 6: Federelement
- 7: Bedienelement
- 8: Wandung
- 10: Halteelement
- 12: Hohlraum
- 13: oberer, zylindrischer Abschnitt
- 14: umlaufender Vorsprung
- 16: Befestigungselement
- 18: Bohrung/ Luftkanal/
- H: Höhe
- Db: Durchmesser Boden
- Da: Durchmesser des umlaufenden Vorsprungs
- Di: Durchmesser des oberen zylindrischen Bereichs
- Ds: Durchmesser Saugnapf
- Dk: Durchmesser des unteren zylindrischen Bereichs

## Patentansprüche

1. Einbringvorrichtung (1) zum, insbesondere permanenten, Anbringen einer Filtermembran an ein Element, insbesondere eine Matrize, eines Heißgetränkesystems, insbesondere einer Portionskaffeemaschine, wobei die Einbringvorrichtung (1) ein Halteelement (10) mit wenigstens einer Aufnahmeeinrichtung (2) aufweist, welche zum wenigstens zeitweisen Aufnehmen einer Filtermembran geeignet und bestimmt ist,
**dadurch gekennzeichnet, dass**
die Aufnahmeeinrichtung (2) wenigstens eine Ansaugeinrichtung (4) aufweist, die zum Aufnehmen einer Filtermembran via Unterdruck geeignet und bestimmt ist.

2. Einbringvorrichtung (1) gemäß Anspruch 1,
**dadurch gekennzeichnet, dass**
die Ansaugeinrichtung (4) wenigstens einen Saugkopf aufweist, dessen Querschnitt sich bevorzugt in eine Richtung, besonders bevorzugt stetig, flächig vergrößert.

3. Einbringvorrichtung (1) gemäß dem vorhergehenden Anspruch 2,
**dadurch gekennzeichnet, dass**
der Querschnitt des wenigstens einen Saugkopfes einen maximalen Durchmesser (Ds) von 8 cm, bevorzugt von 6 cm, bevorzugt von 5 cm, bevorzugt von 3.5 cm, bevorzugt von 3 cm und besonders bevorzugt von 2.5 cm und/oder einen minimalen Durchmesser (Ds) von 0.5 cm, bevorzugt von 1 cm, bevorzugt von 1.5 cm und besonders bevorzugt von 2 cm aufweist.

4. Einbringvorrichtung (1) gemäß wenigstens einem der vorhergehenden Ansprüche,
**dadurch gekennzeichnet, dass**
die Aufnahmeeinrichtung (2) vertikal bewegbar gegenüber dem Halteelement (10) ausgebildet ist.

5. Einbringvorrichtung (1) gemäß wenigstens einem der vorhergehenden Ansprüche,
**dadurch gekennzeichnet, dass**
das Halteelement (10) kapselartig ausgebildet ist.

6. Einbringvorrichtung (1) gemäß wenigstens einem der vorhergehenden Ansprüche,
**dadurch gekennzeichnet, dass**
sie wenigstens ein Federelement (6) aufweist, durch welches bevorzugt die Aufnahmeeinrichtung (2) und/oder die Ansaugeinrichtung (4) relativ zu dem Halteelement (10) vorgespannt werden kann.

7. Einbringvorrichtung (1) gemäß wenigstens einem der vorhergehenden Ansprüche,
**dadurch gekennzeichnet, dass**
sie wenigstens einen Luftkanal (18) oder wenigstens eine Luftleitung zur Beeinflussung eines von der Ansaugeinrichtung (4) erzeugten Unterdrucks aufweist.

8. Einbringvorrichtung (1) gemäß wenigstens einem der vorhergehenden Ansprüche,
**dadurch gekennzeichnet, dass**
das Halteelement (10) eine Höhe (H) und/oder die Einbringvorrichtung (1) eine vertikale Ausdehnung (H) von wenigstens 0.5 cm, bevorzugt wenigstens 1 cm, bevorzugt wenigstens 1.5 cm und besonders bevorzugt von wenigstens 2 cm und/oder eine Höhe von maximal 5 cm, bevorzugt maximal 3 cm und besonders bevorzugt maximal 2.5 cm aufweist.

9. Einbringvorrichtung (1) gemäß wenigstens einem der vorhergehenden Ansprüche,
**dadurch gekennzeichnet, dass**
das Halteelement (10) eine horizontale Ausdehnung (Da) und/oder die Einbringvorrichtung (1) eine horizontale Ausdehnung (Da) von wenigstens 1.5 cm, bevorzugt von wenigstens 2 cm, bevorzugt wenigstens von 2.5 cm und besonders bevorzugt von wenigstens 3.5 cm und/oder eine horizontale Ausdehnung (Da) von maximal 8 cm, bevorzugt maximal 6 cm, bevorzugt maxiamal 6,5 cm, bevorzugt maximal 5 cm, bevorzugt maximal 4.5 cm und besonders bevorzugt maximal 4 cm aufweist.

10. Verfahren zum, insbesondere permanenten, mechanischen Anbringen einer Filtermembran an ein zu ergänzendes Element, bevorzugt an eine Matrize, eines Heißgetränkesystems, insbesondere einer Portionskaffeemaschine, mittels einer Einbringvorrichtung (1) aufweisend ein Halteelement (10) mit wenigstens einer Aufnahmeeinrichtung (2), welches zum wenigstens zeitweisen Aufnehmen einer Filtermembran geeignet und bestimmt ist, wobei die Aufnahmeeinrichtung (2) wenigstens eine Ansaugeinrichtung (4) aufweist, die zum Aufnehmen einer Filtermembran via Unterdruck geeignet und bestimmt ist,
**gekennzeichnet durch** die Schritte:
- Aufnehmen einer Filtermembran via Unterdruck mittels der Einbringvorrichtung (1);
- Anordnen der Filtermembran an das zu ergänzende Element, bevorzugt die Matrize, des Heißgetränkesystems via Anordnen wenigstens eines Bereiches der Filtermembran an das zu ergänzende Element die Matrize des Heißgetränkesystems und bevorzugt durch Lösen des Unterdrucks.

11. Verfahren gemäß dem vorhergehenden Anspruch,
**dadurch gekennzeichnet, dass**
es das Einlegen der Einbringvorrichtung (1) in einen Pressstock des Heißgetränkesystems und bevorzugt ein Anpressen der Filtermembran an das zu ergänzende Element die Matrize der Portionskaffeemaschine, bevorzugt durch Spannen des Pressstocks des Heißgetränkesystems, durch Beaufschlagung der Matrize mit Wasser, und bevorzugt das Öffnen des Pressstocks und Entfernen der Einbringvorrichtung (1)mit oder ohne vorherige Wasserbeaufschlagung der Einbringvorrichtung (1) umfasst.
